# EUROPEAN PATENT APPLICATION

(11) **EP 3 569 834 A1**
(43) Date of publication of application: **20.11.2019**
(21) Application number: 18173078.9
(22) Date of filing: 18.05.2018
(51) Int. Cl.: F01N 3/20, F01N 13/04, F01N 13/00

(54) **INTERNAL COMBUSTION ENGINE AND METHOD FOR REDUCING NITROGEN OXIDE EMISSIONS**

(71) Applicant: Winterthur Gas & Diesel Ltd., 8401 Winterthur (CH)
(72) Inventor: Plüss, Alain, 8400 Winterthur (CH); Kadau, Dirk, 8046 Zürich (CH); Brutsche, Martin, 8418 Schlatt (CH); Stark, Matthias, 8400 Winterthur (CH)
(74) Representative: Hepp Wenger Ryffel AG

(57) **Abstract**

The invention relates to an internal combustion engine (1). The internal combustion engine comprises at least two cylinders (2). Each of the two cylinders comprises a combustion chamber (3) and has an inlet for a fuel and an outlet (5) for an exhaust gas with an outlet valve (6). The engine comprises at least one separation device (7) downstream of the combustion chambers (3) for separating the exhaust gas of all combustion chambers (3) into a first and a second exhaust gas stream. A first (8) and a second exhaust line (9) are connected to the at least one separation device (7). The at least one separation device (7) is configured to separate the exhaust gas from the combustion chambers (3) into a first gas stream for the first component exhaust line (8) and a second gas stream for the second component exhaust line (9). A first selective catalytic reduction (SCR) reactor (10) is arranged in the first component exhaust line (8) downstream of the separation device (7). The second component exhaust line (9) and the first component exhaust line (9) are separate from each other at least until the first SCR reactor (10). The first SCR reactor (10) has a maximum capacity of 80% or less of a full load outflow rate of the at least two cylinders (2).

## Description

The present invention relates to an internal combustion engine and a method for reducing nitrogen oxide emissions according to the preamble of the independent claims.

The invention relates to the technical field of combustion engines and the reduction of their emissions.

For large ships the emissions requirements have been increasing, in particular with regard the nitrogen oxide emissions. Thus, there is a need to reduce the amount of nitrogen oxides in the exhaust gas emitted by the internal combustion engines of these ships.

The use of reactors for a selective catalytic reduction (SCR) in these combustion engines is known. One problem of the known reactors in combustion engines is that at low loads, the selective catalytic reduction does not reduce the emitted nitrogen oxides sufficiently. Further the known SCR reactors are inflexible and only adapted for a high nitrogen reduction at high loads (e.g. to achieve tier III requirements).

DK 2015 70704 discloses a two-stroke internal combustion engine with a plurality of cylinders having combustion chambers and an exhaust gas system. The exhaust gas system comprises an exhaust gas receiver, for receiving exhaust gas from the plurality of cylinders and at least one SCR reactor located downstream of the exhaust gas receiver. Due to too low temperatures, sulfuric acid is neutralized by ammonia and forms a sticky product called ABS, which deposits on the catalyst material in the SCR reactor. In order to regenerate the SCR reactor, DK 2015 70704 proposes to deliver exhaust gas at a higher temperature from one cylinder. This high temperature exhaust gas is supplied through a regeneration path to the SCR reactor for a limited time. The cylinder from which the high temperature gas is removed has a lower power output. The engine has the disadvantage that an engine governor has to compensate for the lower power output. Further, the proposed engine is not adapted for NOx reduction at low loads.

DE 10 2008 058 612 discloses a method for the reduction of nitrogen oxides in exhaust gases. The apparatus includes a separation of the exhaust gas into a first part which is recirculated and a second part which is directed to a turbine. The part that is recirculated is directed into the combustion chamber and nitrogen oxide emissions are reduced. A reduction of nitrogen oxides with an SCR is not shown.

The problem of the invention is to reduce nitrogen oxides in the exhaust gas of an internal combustion engine at low engine loads. A further, particular problem of the invention is to provide a flexible and efficient reduction of nitrogen oxides for different engine loads.

According to a first aspect of the invention an internal combustion engine is provided. The internal combustion engine is preferably a two-stroke engine. The engine is in particular suitable for a propulsion system, for example a propulsion system of a ship. The internal combustion engine comprises at least two cylinders. Each of the two cylinders comprises a combustion chamber and has an inlet for a fuel and an outlet for an exhaust gas with an outlet valve. The engine comprises at least one separation device downstream of the combustion chambers. A first and second exhaust line are connected to the at least one separation device. The at least one separation device is configured to separate the exhaust gas from each combustion chamber into a first gas stream for the first component exhaust line and a second gas stream for the second component exhaust line. A first selective catalytic reduction (SCR) reactor is arranged in the first component exhaust line downstream of the separation device. The second component exhaust line and the first component exhaust line are separate from each other at least until the first SCR reactor. The first SCR reactor has a maximum capacity of 80% or less of a full load outflow rate of the at least two cylinders. Preferably, the first SCR reactor has a maximum capacity of 60% or 50% or less of a full load outflow rate of the at least two cylinders.

Full load may be the operating condition of the internal combustion engine at which the internal combustion engine provides a maximal power or torque. If a reduction of an energy supply results in a lower power or torque, this operating condition is called partial load. Full load may be the CMCR (contract maximum continuous rating) point of the engine. In one embodiment, the full load (e.g. CMCR) is calculated by using a desired vessel speed, a desired power and optionally a desired propeller speed.

The separation device is configured to separate the exhaust gas into two streams. Since only a part of the exhaust gas is directed to the first SCR, a smaller SCR reactor may be chosen. Large SCR reactors dispose significant restrictions on the construction of engines. Large SCRs are expensive, difficult to integrate in the engine, and result in a loss of fuel efficiency. Since only a part of the exhaust gases are guided through the SCR, space and cost may be saved.

In two-stroke engines charge air is compressed, a fuel is injected and the mixture is combusted in the cylinder. The gas mixture resulting from the combustion in the cylinder is called "combustion gas" in the following. The combustion gas may also comprise particulate matter.

Scavenge air is used to eject the combustion gas from the combustion chamber through the outlet. The combination of scavenge air and combustion gas is ejected through the outlet of the cylinder and collectively called "exhaust gas".

Due to the scavenging the hot combustion gas from the cylinder is pushed through the outlet with the colder scavenging air. During the scavenging the scavenge air and the combustion gas mix. Nevertheless, the exhaust gas has a temperature gradient because during the discharge phase a concentration of the combustion gas is initially higher and drops over time.

In other words, the gas guided through the outlet can be separated in a first part of the exhaust gas being relatively hot (i.e. mostly combustion gas) and a second part of the exhaust gas (i.e. mostly scavenging air), which is relatively cold. The first part of the exhaust gas includes a major part of the nitrogen oxides.

The engine may comprise a turbocharger. The turbocharger may be arranged in the first and/or second component exhaust line. The turbocharger may be arranged downstream of the first and/or second SCR. In an alternative embodiment, the turbocharger may be arranged upstream of the second SCR.

The separation device could also be formed by one or two or more valves arranged before the exhaust gas receiver. Preferably, the separation device comprises at least one, in particular two, valves per combustions chamber. The valve(s) may be butterfly valve(s) or poppet valve(s) or any other suitable valve(s). The separation device can also be arranged after the exhaust gas receiver but before the turbocharger or after the turbocharger. The separation device can be formed by multiple valves.

In one embodiment, the separation device comprises a controllable valve for opening and closing the first component exhaust line for separating the exhaust gas into the first and second component exhaust stream. The controllable valve may be controlled by a controller. The controller may be mechanical, i.e. a camshaft of the engine, or electronical.

The different embodiments of a separation device provide a simple and reliable separation of the first and second exhaust gas stream. In particular, it allows separating a part of the exhaust gas discharged first with, relatively more combustion gas and thus a higher temperature from a part discharged later with, relatively, more scavenging air and a lower temperature. In one embodiment, the controllable valve is first opened during a discharge phase of the combustion chamber and then later closed, when the scavenging air flows through the outlet. One embodiment of such a separation device is shown in the European patent application EP 2 151 569 A1.

The engine may comprise an exhaust gas recirculation (EGR). The EGR may be connected to an inlet of the internal combustion chamber and an outlet of the internal combustion chamber.

In one embodiment, the separation device is configured to separate the exhaust gas from the combustion chamber into a first relatively hot gas stream and a second relatively cold gas stream. Preferably the relatively hot gas stream is for the first component exhaust line. Preferably, the relatively cold gas stream is for the second component exhaust line.

The separation device may separate the relatively hot first gas stream by timing an opening and closing of the valves for the first component and second component exhaust lines. In one embodiment, the separation device is configured to guide a first part, which is expelled first from the outlet through the first component exhaust line and a second part which is expelled thereafter through the second component exhaust line.

At low engine loads ammonium bisulfate (ABS) may form and deposit on the catalyst material in the SCR reactor. This is caused by too low temperatures in the exhaust gas. The deposition of ABS in the SCR reactor is avoided by separating the gas stream into two streams. Since one stream is relatively hot, only high temperature gases are guided to the SCR reactor and ABS formation is prevented.

In one embodiment, the engine comprises an exhaust gas receiver for collecting the exhaust gas of the cylinders. The separation device may be arranged upstream of the exhaust gas receiver. Thereby, the exhaust gas may be separated before the components (e.g. combustion gas and scavenge air) of the exhaust gas stream are homogenously mixed in the exhaust gas receiver.

The exhaust gas receiver may be arranged in the second component exhaust line. The separation device may be arranged downstream of the exhaust gas receiver.

In one preferred embodiment, at least one, preferably each, separation device comprises multiple valves. The separation device may comprise two or four valves. In one embodiment two of four valves are used for diverting the first component exhaust stream into the second component exhaust line. The other two valves are used for diverting the second component exhaust gas stream into the second component exhaust line.

In a further preferred embodiment one of three or four or more valves is adapted to divert a first part of the exhaust gas into the first component exhaust stream. The other two or three or more valves are adapted to divert the exhaust gas into the second component exhaust line. Thereby, the first and second component exhaust streams may be generated particularly simply and efficiently.

In one embodiment, the separation devices are formed by the outlet valves of each of the at least two cylinders. In one example, each cylinder may comprise multiple outlet valves. A first outlet valve of each cylinder is adapted to open the first component exhaust line and the second outlet valve is adapted to open the second component exhaust line. In a further example, each cylinder comprises two valves for each component exhaust line. Still further, each outlet may comprise four outlet valves. In these preferred embodiments, the separation device is formed by the outlet valves, providing a compact device.

Additionally or alternatively, the separation device may include one or two or four or more valves, e.g. butterfly valves downstream of the outlet or the outlet valves.

In one embodiment, the engine comprises a second SCR reactor, which is arranged in the second component exhaust line. The second component exhaust line may be arranged downstream of the exhaust gas receiver.

The second SCR may have a greater maximum capacity than the first SCR. The second SCR may have a maximum capacity of at least 80% or 100% of the full load outflow rate of the at least two cylinders. Thereby, and efficient nitrogen oxide reduction at high engine loads is provided. Additionally, the provision of two SCR allows a flexible and efficient use of the SCRs. For example, at a low load, e.g. when a ship is going at a low velocity, only the first (small) SCR may be used. At higher loads, the second SCR may be added if a high reduction of nitrogen oxides is needed.

In one embodiment, a first inlet for a reducing agent is arranged in the first component exhaust line. The first inlet may be arranged downstream of the separation device and/or the first inlet may be arranged upstream of the first SCR reactor. The reducing agent may be urea or ammonia.

In a further embodiment, a second inlet for a reducing agent is arranged in the second component exhaust line. The second inlet may be arranged downstream of the separation device and/or the second inlet may be arranged upstream of the second SCR reactor. The reducing agent may be urea or ammonia.

The first and second inlet may inject the same reducing agent (i.e. ammonia or urea). In a preferred embodiment, the first and second inlets inject different reducing agents. In one example, the first inlet may inject urea and the second inlet may inject ammonia. Urea requires an endothermic reaction to ammonia. Since ammonia does not need to react, it is particularly suited as reducing agent at low exhaust gas temperatures.

In one embodiment, the second component exhaust line comprises an SCR pipe and a bypass pipe, preferably in parallel. The second SCR may be arranged in the SCR pipe. The second component exhaust line comprises at least one, preferably two, valves for guiding the exhaust gas into the SCR and/or the bypass pipe. Further, the engine may comprise a controller adapted to actuate the valves such that the exhaust gas is directed to the second SCR or through the bypass pipe or through both.

The bypass pipe allows a fuel-efficient operation mode of the engine. Thus, depending on the desired operation mode, i.e. fuel-efficient or emission reduced at high/low loads, an operator can select through which pipes/component exhaust lines the exhaust gases are directed. Examples for operation modes are described with regard to the shown embodiments of the invention.

In one embodiment, the first component exhaust line comprises a heating element disposed upstream of the first SCR reactor. Additionally or alternatively, a further heating element may be disposed upstream of the second SCR. In certain operation modes, in particular at low loads, the exhaust gases may be too cold, which results in the deposition of ammonium bisulfate (ABS) onto the catalyst of the first and/or second SCR reactor. In order to prevent this and in order to avoid having to use a recirculation of gases from selected cylinders, the respective SCR reactor itself may comprise a heating device to heat the exhaust gas to a sufficient temperature.

A sufficient temperature (minimum continuous operating temperature) may be calculated from the absolute pressure in the exhaust gas and sulfur concentration in the fuel.

For example, for an absolute pressure of 1 bar and a concentration of 0.1% sulfur, the minimum temperature may be 280°C (rounded). Preferably the minimum temperature is 30° higher than the sufficient temperature T_{S}, i.e. 310°C for 1 bar and 0.1 % sulfur.

In particular, for 1.5 bar, the temperature is above 290°C, preferably above 320°C for 0.1% sulfur. For 0.5% sulfur, at 1.5 bar, the temperature may be above 310°C, preferably above 340°C. For 3.5% sulfur (and also 1.5 bar) the temperature may be above 340°C, preferably above 370°C.

A further aspect of the invention relates to a method for reducing nitrogen oxide (NOₓ) emissions of an internal combustion engine. Preferably, the engine is a combustion engine as mentioned herein above. The method comprises the following steps:
- Burning a fuel in at least two cylinders having an internal combustion chamber with an inlet for a fuel and an outlet for an exhaust gas with an outlet valve
- Discharging exhaust gas through the outlet
- Separating the exhaust gas of all combustion chambers downstream of the combustion chambers into a first and a second exhaust gas stream with a separation device, wherein the first exhaust gas stream is transported by a first component exhaust line, and the second exhaust gas stream is transported by a second component exhaust line, and wherein both exhaust lines are connected to the at least one separation device

- Guiding the first exhaust gas stream in the first component exhaust line to a first SCR-reactor with a maximal capacity of 80% or less, preferably 60% or 50% or less, of a full load outflow rate of the at least two cylinders,
- Guiding the second exhaust gas stream in the second component exhaust line, wherein the first and the second exhaust lines are kept separate at least until the first SCR-reactor,
- Reacting the first exhaust gas stream in the first SCR-reactor such that a concentration of NOₓ in the first exhaust gas stream is reduced.

In a preferred embodiment of the method, the method additionally comprises the step of heating the first exhaust gas stream upstream of the first SCR reactor.

In a preferred embodiment, a part discharged first from the internal combustion chambers is guided into the first component exhaust line and a part discharged thereafter is guided into the second component exhaust line. Typically, the part discharged first has a higher temperature than the part discharged later (second part). Thereby, a simple method of separating the exhaust gas into a relatively hot and relatively cold exhaust stream is provided.

In a preferred embodiment, the first exhaust gas stream is relatively hot and the second exhaust gas stream is relatively cold. As mentioned herein, relatively hot is compared to the other exhaust gas stream. For example, a first exhaust gas stream that is relatively hot means that it is hotter than the second exhaust gas stream.

In a preferred embodiment, the method additionally comprises the step of injecting a reductant into the first and/or second exhaust gas stream upstream of the first and/or a second SCR reactor in the second exhaust gas stream.

In a preferred embodiment, the method additionally comprises the step of guiding the second exhaust gas component stream through the second component exhaust line to a second SCR reactor and reacting the second exhaust gas component stream in the second SCR reactor, such that a concentration of nitrogen oxides in the second exhaust gas component stream is reduced.

In a preferred embodiment the method additionally includes the step of guiding the second exhaust gas stream partially or entirely through a bypass pipe without reacting the second component gas stream partially or entirely. In a preferred embodiment, the second exhaust gas stream and/or the first exhaust gas stream is directed to a turbocharger.

In one embodiment, the first and/or second stream is guided parallel to the turbocharger.

Non-limiting embodiments of the invention are described, by way of example only, with respect to the accompanying drawings, in which:
- Figure 1:: shows a schematic drawing of a first embodiment according to the present invention,
- Figure 2:: shows a schematic drawing of a second embodiment according to the present invention,
- Figure 3:: shows an example of an engine

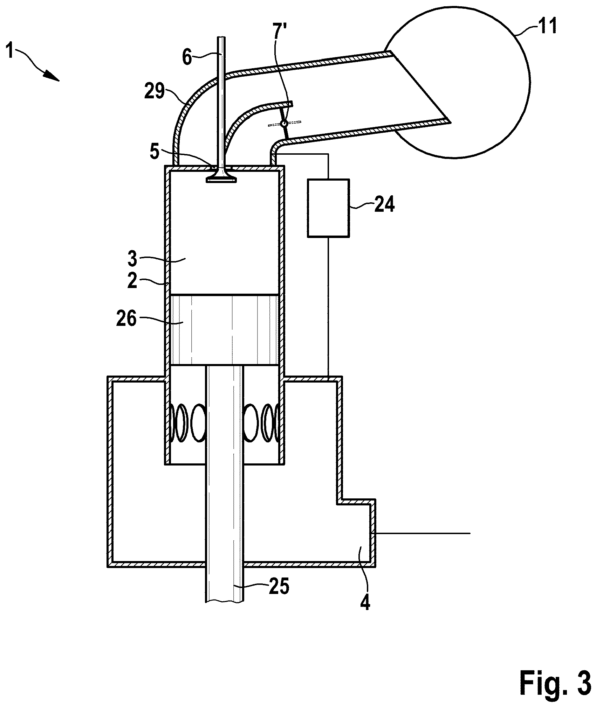

Figure 3 shows an internal combustion engine. The internal combustion engine 1 comprises a cylinder 2 with a combustion chamber 3. Inside the combustion chamber 3, a piston 26 with a piston rod 25 is provided. Fuel is guided through a fuel inlet (not shown) into the combustion chamber 3 and burned in the combustion chamber 3. The combustion gas is guided through an outlet 5 which comprises a single outlet valve 6. The combustion gas is scavenged with scavenge air. After the outlet valve 6 the combustion gas and the scavenge air (collectively exhaust gas) are guided through an outlet pipe 29.

The outlet pipe 29 comprises two channels. A first channel is used for directing a part of the exhaust gas through an EGR pipe with an EGR cleaner 24 with a butterfly valve 7'. When the butterfly valve 7' is closed, the exhaust gas in the first channel is guided through the EGR. When the butterfly valve 7' is in an open position, the first channel guides its exhaust gas to an exhaust receiver 11. The second channel is used for guiding the rest of the exhaust gas to the exhaust gas receiver 11.

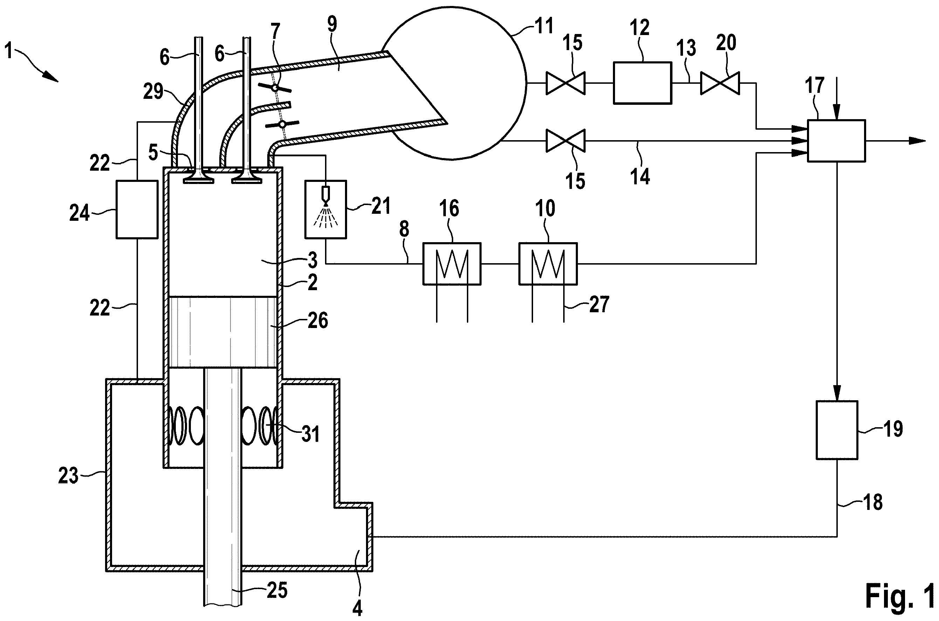

Figure 1 shows a schematic drawing of a first embodiment of a two-stroke, cross-head internal combustion engine 1. The engine 1 comprises the parts of the engine of figure 3.

In addition, a separation device 7 is arranged in the outlet pipe 29. The separation device 7 comprises two valves which open and close the two channels of the outlet pipe 29.

A first component exhaust line 8 is connected to the outlet pipe 29. The connected first component exhaust line 8 guides a part of the exhaust gas through the outlet 5 to a first SCR reactor 10. The first SCR reactor 10 reduces nitrogen oxides in the exhaust gas with a selective catalytic reduction. Examples of catalysts used in such SCR reactors are titanium dioxide, doted with oxides of base metals such as vanadium and tungsten. The catalyst can be extruded from a mixture of titanium dioxide, vanadium and tungsten.

Alternatively, cordierites with a wash coat made of titanium dioxide, vanadium and tungsten may be used. Further alternatively, a metallic base may be coated with the mentioned wash coat.

In another embodiment, metal zeolites such as copper or iron zeolites could be used as catalyst.

The reduction of nitrogen oxides is based on a reaction of the nitrogen oxides with ammonia. Ammonia is generated by injecting urea with a urea injector 21 upstream of the first SCR reactor 10. Only a part of the exhaust gas of the cylinder 2 is guided through the first component exhaust line 8. The exhaust gas guided through line 8 may have a temperature which is too low for the selective catalytic reaction. At low temperatures (such as below 290°C at 1.5 bar and 0.1% sulfur) sulfuric acid is neutralized by ammonia and forms sticky product ammonia bisulfate (ABS). ABS may deposit on the catalyst material of the SCR reactor. In order to avoid this, the line 8 may additionally comprise a heating element 16, which is disposed upstream of the first SCR reactor and may be disposed downstream of the urea injector 21.

In the two-stroke engine 1, scavenge air is used during the exhaust phase to discharge a combustion gas from the combustion chamber 3. Hence, the exhaust gas comprises scavenge air as well as combustion gas. The combustion gas has a higher temperature than the scavenge air due to the combustion. Further, a concentration of nitrogen oxides is higher in the combustion gas than in the scavenge air.

If the combustion gas and the scavenge air are mixed, as for example, in an exhaust gas receiver 11, such as an exhaust gas manifold, the temperature of the combustion gas is reduced. At low loads, this temperature is particularly low, because a fuel injection is small, an amount of combustion gas is low and an SCR reactor cannot operate properly.

Thus, the combustion gas is separated from the scavenge air at the outlet 5 of the cylinder 2 at low loads. A first method of separating is closing a first valve of separation device 7 for the first component exhaust line 8 and closing a second valve of separation device 7 for the second component exhaust line 9. In this configuration, the exhaust gas is entirely guided through the first component exhaust line 8. At higher loads, both valves, for example butterfly valves, of separation device 7 are open and a majority of the exhaust gas is guided through the second component exhaust line 9.

Differing from the engine shown in figure 3, the engine shown in figure 1 comprises two outlet valves 6 for the combustion chamber 3. Even though two outlet valves are shown, preferably one or four valves are used. The outlet valves 6 are used to guide the exhaust gas. First, while combustion gas is expelled, the outlet valve for the first component exhaust line 8 is open while the outlet valve for the second component exhaust line 9 is closed. In this configuration, the exhaust gas is guided through the first component exhaust line 8. This may be supported by closing both butterfly valves of separation device 7. As soon as the scavenge air arrives at the outlet 5, the outlet valve 6 for the first component exhaust line 8 is closed and the outlet valve of the second component exhaust line 9 is opened.

Thereby, the separated part is guided through the first component exhaust line 8, which allows a reliable reduction of nitrogen oxides in the first SCR reactor 10. In addition, since only a part of the exhaust gas is guided through line 8, a small SCR may be used. An SCR reactor 10 with a maximum capacity of 40% of a full load outflow rate is sufficient, which saves space. The SCR reactor 10 may comprise a reactor heater 27 to adjust the temperature in the reactor further.

The second component exhaust line 9 leads to the exhaust gas receiver 11. From the exhaust gas receiver 11, the exhaust gas is let through an SCR pipe 13 or a bypass pipe 14. The SCR pipe 13 and the bypass pipe 14 each comprise valves 15. The valves 15 can be opened and closed independently such that the bypass pipe 14 and/or the SCR pipe 13 are used. The SCR pipe 13 comprises a second SCR reactor 12. The second SCR reactor 12 is adapted for higher throughputs than the first SCR reactor 10. The second SCR reactor 12 has a maximum capacity of at least 60% of the full load outflow rate of the cylinders 2. In one embodiment, the second SCR reactor 12 and the first SCR reactor 10 may have a combined total capacity of at least 100% of the full load outflow rate of the at least two cylinders. The bypass pipe may not comprise an SCR.

In addition, the SCR pipe 13 comprises a second valve 20 downstream of the SCR reactor 12. The valve 20 prevents a backflow into the SCR pipe 13.

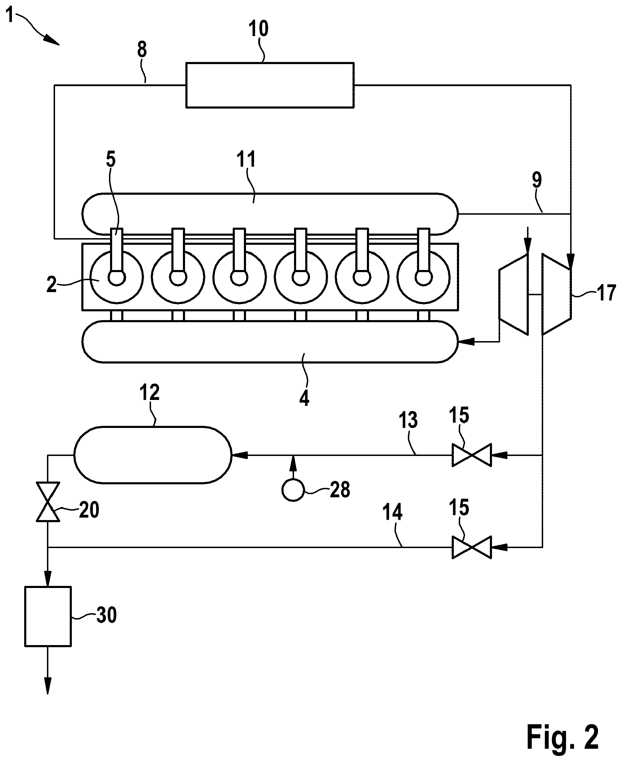

The first line 8 and the second line 9 (i.e. the bypass pipe 14 and the SCR pipe 13) lead to a turbocharger 17 and to a funnel 30 (see figure 2) thereafter. The turbocharger 17 draws fresh air with the energy stored in the exhaust gas. The fresh air drawn by the turbocharger 17 is guided through a cooler system 19 and a fresh air feeder 18 to the inlet 4. After the inlet 4, the fresh air is guided through a scavenge air receiver 23 and through flushing holes 31 into the cylinder 2.

Additionally to the nitrogen oxide reduction within the SCR reactors 10, 12, emissions such as particles and sulfuric acids are reduced with an EGR cleaner 24. An EGR pipe 22 is connected to the outlet 5 of the cylinder 2. The EGR pipe 22 leads exhaust gas to the EGR cleaner 24 and after the EGR cleaner 24 into the combustion chamber 3. The EGR cleaner 24 may comprise a scrubber, a cooler and a water mist catcher.

The engine 1 as shown in figure 1 allows four different operational modes:
A first operational mode is particularly suited for low loads and allows a fulfillment of tier III requirements. At low loads, the valves 15 and the separation device 7 are set such that the first component exhaust line 8 and the bypass pipe 14 are open. The SCR pipe 13 is closed. A first part of the exhaust gas which comprises combustion gas is guided through the first SCR reactor 10, where nitrogen oxides are reduced. The rest of the exhaust gas, which mainly comprises scavenge air, is guided through the bypass pipe 14. Alternatively, it is also possible to guide the first part of the exhaust comprising mainly combustion gas through SCR pipe 13 and second SCR reactor 12 while the rest of the exhaust gas, which mainly comprises scavenge air, is guided through first component exhaust line 8. In this case first SCR reactor 10 is not working and valve 15 of SCR bypass pipe 14 is closed. In particular, SCR reactor 10 can also be bypassed by a separated bypass line (not shown).

In a second operational mode, the exhaust gas is guided through the second exhaust line 9 only and no exhaust gas is guided through the first exhaust line 8. In a variant of the second operational mode, the exhaust gas is only guided through the SCR pipe 13 and the second SCR reactor 12. The second operational mode corresponds to the SCR reactors in engine as known in the prior art.

A third operational mode is particularly suited for high loads when a high nitrogen oxide reduction is desired (tier III). In the third operational mode the first and second component exhaust lines 8, 9 are both open. In the third operational mode, the bypass pipe 14 is closed and the SCR pipe 13 is open. The first and second SCR reactor 10, 12 are run in parallel. At high loads, the scavenge air is sufficiently hot such that a reliable nitrogen oxide reduction becomes possible in the second SCR reactor 12.

The first small SCR reactor 10 is particularly efficient in this operational mode, since the heater 16 may be switched off, because the combustion gas of the exhaust gas is sufficiently hot for the nitrogen oxide reaction without additional heating. Further, the first small SCR reactor 10 allows a higher reduction of nitrogen oxides because the nitrogen oxides have a higher concentration in the parts directed to the first SCR reactor 10.

Since the exhaust gas guided through the second exhaust line 9 is also treated, higher total NOX reductions are possible.

In both the first and the second mode, in which only one SCR is employed, the relative NOx reduction preferably is above the required Tier III level to ensure meeting Tier III criteria after mixing with the non-reduced part of the exhaust.

In a fourth operational mode, the exhaust gas is guided through the bypass pipe 14 only and the first component exhaust line 8 as well as the SCR pipe 13 are closed. In this operational mode, the SCRs 10 and 12 are switched off. The fourth operational mode is particularly fuel efficient.

Figure 2 shows a second embodiment of an internal combustion engine 1. The second embodiment of the engine 1 is similar to the first embodiment. As a result the reference signs refer to similar features. However, in contrast to the first embodiment, the SCR pipe 13 with the second SCR reactor 12 and the bypass pipe 14 are arranged downstream of the turbocharger 17.

Engine 1 comprises cylinders 2. At the outlet of the cylinders 2, and exhaust gas from the cylinders 2 is separated into a first and a second stream. The first stream is guided through a first component exhaust line 8 and the second stream is guided through a second component exhaust line 9. The second component exhaust line 9 comprises the exhaust gas receiver 11. The first component exhaust line 8 is composed as shown with reference to figure 1, comprises the first SCR reactor 10 and is parallel to the exhaust gas receiver 11. After the first SCR reactor 10 and before the second SCR reactor 12 and the bypass pipe 14, the first component exhaust line 8 merges into the second line 9 and the entire exhaust gas of all cylinders 2 is guided through the turbocharger 17.

After the turbocharger 17 the second component exhaust line 9 allows the exhaust gas to be directed into the second SCR reactor 12 through the SCR pipe 13 or through the bypass pipe 14. Thereafter, the exhaust gas may be released through a funnel 30. In a variation the second SCR reactor 12 and the bypass pipe 14 may be arranged upstream of the turbocharger 17.

The operational modes outlined above regarding figure 1 can also be used in the embodiment shown in figure 2.

## Claims

1. Internal combustion engine, preferably a two-stroke engine (1), in particular for a propulsion system, comprising:
- at least two cylinders (2), each comprising a combustion chamber (3) having an inlet for a fuel and an outlet (5) for an exhaust gas with an outlet valve (6),
- wherein the engine comprises at least one separation device (7) downstream of the combustion chambers (3)
- wherein a first component exhaust line (8) and a second component exhaust line (9) are connected to the at least one separation device (7),
- wherein the at least one separation device (7) is configured to separate the exhaust gas from each combustion chamber (3) into a first gas stream for the first component exhaust line (8) and a second gas stream for the second component exhaust line (9), and
- wherein a first SCR-reactor (10) is arranged in the first component exhaust line (8) downstream of the separation device (7)
- the second component exhaust line and the first component exhaust lines (8,9) are separate from each other at least until the first SCR reactor (10),
**characterized in that,**
- the first SCR reactor (10) has a maximal capacity of 80% or less, preferably 60% or 50% or less, of a full load outflow rate of the at least two cylinders (2).

2. Internal combustion engine according to claim 1, **characterized in that**, the separation device (7) is configured to separate the exhaust gas from the combustion chamber (3) into a first relatively hot gas stream, preferably for the first component exhaust line (8) and a second relatively cold gas stream, preferably for the second component exhaust line (9).

3. Internal combustion engine according to one of the preceding claims, **characterized in that**, the separation device (7) comprises a controllable valve, in particular a butterfly valve, for opening and closing the first component exhaust line for separating the exhaust gas into the first and second component exhaust stream.

4. Internal combustion engine according to one of the preceding claims, **characterized in that**, the engine comprises an exhaust gas receiver for collecting the exhaust gas of the cylinders and wherein the at least one separation device (7) is arranged upstream of the exhaust gas receiver (11).

5. Internal combustion engine according to claim 4, **characterized in that**, the separation devices (7), are formed by the outlet valve of each of the at least two cylinders (2).

6. Internal combustion engine according to claim 5, **characterized in that**, at least one, preferably each, separation device (7) comprises multiple valves, preferably two or four valves, for the respective combustion chamber (3), for separating the exhaust gas into the first and second component exhaust stream.

7. Internal combustion engine according to one of the preceding claims, **characterized in that**, the engine (1) comprises a second SCR-reactor (12), which is arranged in the second component exhaust line (9), preferably downstream of the exhaust gas receiver (11).

8. Internal combustion engine according to claim 7 **characterized in that**, the second SCR (12) has a greater maximal capacity than the first SCR (10), preferably at least 80% of the full load outflow rate of the at least two cylinders (2) .

9. Internal combustion engine according to one of the preceding claims, **characterized in that**, the second component exhaust line comprises an SCR pipe (13) and a bypass pipe (14), wherein the second SCR (12) is arranged in the SCR pipe and wherein the second component exhaust line comprises at least one, preferably two, valves (15) for guiding the exhaust gas into the second SCR (12) and/or the bypass pipe (14).

10. Internal combustion engine according to one of the preceding claims, **characterized in that**, the first component exhaust line (8) comprises a heating element (16) disposed upstream of the first and/or second SCR-reactor (10,12).

11. Method for reducing NOₓ emissions of an internal combustion engine, preferably a combustion engine according to any one of the claims 1 to 10, comprising the steps of:
- Burning a fuel in at least two cylinders (2) having an internal combustion chamber (3) with an inlet for a fuel and an outlet (5) for an exhaust gas with an outlet valve (6)
- Discharging exhaust gas through the outlet (5)
- Separating the exhaust gas of all combustion chambers (3) downstream of the combustion chambers (3) into a first and a second exhaust gas stream with a separation device (7), wherein the first exhaust gas stream is transported by a first component exhaust line (8), and the second exhaust gas stream is transported by a second component exhaust line (9), and wherein both exhaust lines (8,9) are connected to the at least one separation device (7)
- Guiding the first exhaust gas stream in the first component exhaust line (8) to a first SCR-reactor (10) with a maximal capacity of 80% or less, preferably 60% or 50% or less, of a full load outflow rate of the at least two cylinders,
- Guiding the second exhaust gas stream in the second component exhaust line (9), wherein the first and the second exhaust lines are kept separate at least until the first SCR-reactor (10),
- Reacting the first exhaust gas stream in the first SCR-reactor such that a concentration of NOₓ in the first exhaust gas stream is reduced.

12. Method according to claim 11, wherein the first exhaust gas stream is relatively hot and the second exhaust gas stream is relatively cold.

13. Method according to claim 11 or 12, wherein in the separating step a part discharged first from the internal combustion chambers is guided into the first component exhaust line (8) and a part discharged thereafter is guided into the second component exhaust line (9).

14. Method according to one of the claims 11 to 13, additionally comprising the step of:
- Heating the first exhaust gas stream upstream of the first SCR-reactor (10).

15. Method according to one of the claims 11 to 14, additionally comprising the step of:
- Guiding the second exhaust gas component stream through the second component exhaust line (9) to a second SCR reactor (12)
- Reacting the second exhaust gas component stream in the second SCR reactor (12).
